(19) Europäisches Patentamt / European Patent Office / Office européen des brevets

(11) **EP 3 905 536 B1**

(12) **EUROPEAN PATENT SPECIFICATION**

(45) Date of publication and mention
of the grant of the patent:
**18.09.2024 Bulletin 2024/38**

(21) Application number: **20171747.7**

(22) Date of filing: **28.04.2020**

(51) International Patent Classification (IPC):
**H04B 1/7097** *(2011.01)* **G01S 19/24** *(2010.01)*
**G01S 19/21** *(2010.01)* **G01S 19/35** *(2010.01)*

(52) Cooperative Patent Classification (CPC):
**H04B 1/7097; G01S 19/21; H04B 2201/70715**

(54) **NOISE DISTRIBUTION SHAPING FOR CDMA SIGNALS**

RAUSCHVERTEILUNGSFORMUNG FÜR CDMA-SIGNALE

FAÇONNAGE DE DISTRIBUTION DE BRUIT POUR SIGNAUX CDMA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.11.2021 Bulletin 2021/44**

(73) Proprietor: **Airbus Defence and Space GmbH
82024 Taufkirchen (DE)**

(72) Inventors:
• **SOUALLE, Francis
82024 Taufkirchen (DE)**

• **CATTENOZ, Mathieu
92240 Malakoff (FR)**

(74) Representative: **Frenkel, Matthias Alexander
Wuesthoff & Wuesthoff
Patentanwälte und Rechtsanwalt PartG mbB
Schweigerstraße 2
81541 München (DE)**

(56) References cited:
**EP-A1- 3 118 653     EP-A1- 3 182 164
EP-A1- 3 182 606     EP-A1- 3 454 090**

**Description**

The invention relates to a method of noise distribution shaping for signal acquisition of a CDMA signal and a device for noise distribution shaping and signal acquisition of a CDMA signal.

Interferences on CDMA signals emitted by GNSS satellites are prone to impulsed noise environments, for example in the vicinity of ignition systems, power lines, current switches or microwave inferred surroundings. Interferences occur usually in a bursed like form, such that they cannot be modelled as Gaussian. This affects the reception performance of a CDMA signal. This can be circumvented by a blanker. Commonly, a blanker sets received signal samples to zero, when the signal samples comprise high values of power. These high values indicate interferences. Typically, a blanker uses two fixed thresholds BTH+ and BTH-, which are symmetrical to zero. The high power value sample exceeds this threshold and is consequently set to zero by the blanker. CDMA signal receivers are usually equipped with such a blanker.

In scenarios, where no interferences occur, the blanker still sets signals to zero, which are affected by large thermal noise. However, this may lead to an undesired reduction of signal to noise and interference ratio.

In the acquisition phase during reception of the CDMA signal, for example when the receiver tries to synchronize the received signal with a replica, a right code delay and Doppler offset are searched. The positions of the chip transitions and the chip amplitude are not known. Consequently, the blanker needs to be modified in order to maximize possibility of detection.

Prior art can be found in EP 3 454 090 A1 which generally relates to a method and device for signal acquisition of a generalized BOC-modulated signal, in EP 3 182 164 A1 which generally relates to noise distribution shaping for signals, particularly CDMA signals, with mitigation of artefact signals, in EP 3 182 606 A1 which generally relates to blanking using signal-based thresholding schemes and in EP 3 118 653 A1 which generally relates to noise distribution shaping for signals, particularly spread spectrum signals like CDMA signals, with improved robustness.

The invention is set out in the independent claims. Preferred embodiments of the invention are set out in the dependent claims.

According to a first aspect of the present invention, a method of noise distribution shaping for signal acquisition of a Code Division Multiple Access (CDMA) signal comprises demodulating the CDMA signal by multiplying with a carrier signal modulated with an estimated Doppler frequency. The carrier of the carrier signal is the CDMA signal carrier. The method further comprises generating a test signal. The test signal has a spreading sequence according to the CDMA signal. The test signal is shifted by an estimated code delay. The method further comprises modifying the noise distribution of the CDMA signal to generate a modified CDMA signal by blanking samples of the CDMA signal, when the samples of the CDMA signal exceed an upper or lower blanking threshold. The upper and lower blanking thresholds are offset by a square root of an estimated power ($P_{est}$) of the CDMA signal multiplied by a chip value polarity of the generated test signal and a predefined scaling factor, $\alpha$. The upper blanking threshold is further offset by a positive value and the lower blanking threshold is further offset by a negative value, and the positive and negative values are set by a scaled standard deviation of thermal noise and circumferential interference.

The method further comprises acquiring the CDMA signal, when a correlation between the modified CDMA signal and the generated test signal is above a predefined detection threshold.

Setting the rising and falling edges of the upper and lower blanking thresholds according to the test signal's rising and falling edges leads to more precise correlation results with the CDMA signal.

$\alpha$ can be positive, negative, constant, time dependent, or changing its sign over time as function of the generated test signal.

The carrier signal can further be shifted by an estimated carrier phase. This carrier phase can be modulated on the carrier signal, which is multiplied with the CDMA signal.

The estimated power can be an estimate of the CDMA signal power or is an estimate being at least 1000 times greater than the CDMA signal power. The estimated power can further be greater than the CDMA signal power.

This can lead to better receiver operating characteristics during acquisition.

The number of blanked samples can indicate detection according to the estimated carrier phase, the estimated Doppler frequency, the estimated code delay and/or the estimated power. The number of blanked samples can be acquired by a signal processor. The number of blanked samples can be stored in a storage device.

The demodulating step can comprise separating the CDMA signal into an inphase and a quadrature component by multiplying the CDMA signal with two carrier signals phase-shifted by 90-degree to each other. Each of the two carrier signals can have a carrier frequency of the CDMA signal. The carrier frequency can be shifted by an estimated Doppler frequency. The step of modifying can comprise modifying the noise distribution of the CDMA signal to generate a modified CDMA signal by blanking samples of the inphase and quadrature components, when the samples of the inphase and quadrature components exceed an upper or lower blanking threshold respectively. The upper and lower blanking thresholds can be offset by a square root of an estimated power ($P_{est}$) of the CDMA signal. The CDMA signal can be multiplied by a chip value polarity of the generated test signal. The CDMA signal can be multiplied by a predefined scaling factor, $\alpha$. The step of acquiring can further comprise acquiring the CDMA signal, when a correlation between the CDMA signal according to the inphase and quadrature component and the generated test signal is above a predefined detection threshold.

The upper and lower blanking thresholds can be offset according to the estimated Doppler frequency.

The upper and lower blanking thresholds can be offset according to the estimated carrier phase. This has the advantage to ensure that the upper and lower blanking thresholds both applied on the inphase and quadrature branch are synchronized to the actual CDMA signal.

The corresponding upper and lower thresholds for the inphase and quadrature component of the CDMA signal can be further expressed as:

$$\bullet \quad BTH_I{}^+(t) = \beta + B0 = \alpha \times sqrt(P_{s,est}(t)) \times c(t) \times \cos(2\pi f_{D,est} \times t + \varphi_{est}) + K_{B0} \times \sigma_{noise}$$

$$\bullet \quad BTH_I{}^-(t) = \beta - B0 = \alpha \times sqrt(P_{s,est}(t)) \times c(t) \times \cos(2\pi f_{D,est} \times t + \varphi_{est}) - K_{B0} \times \sigma_{noise}$$

$$\bullet \quad BTH_Q{}^+(t) = \beta + B0 = \alpha \times sqrt(P_{s,est}(t)) \times c(t) \times \sin(2\pi f_{D,est} \times t + \varphi_{est}) + K_{B0} \times \sigma_{noise}$$

$$\bullet \quad BTH_Q{}^-(t) = \beta - B0 = \alpha \times sqrt(P_{s,est}(t)) \times c(t) \times \sin(2\pi f_{D,est} \times t + \varphi_{est}) - K_{B0} \times \sigma_{noise}$$

$BTH_I{}^+$ can describe the upper blanking threshold for the inphase component. $BTH_I{}^-$ can describe the lower blanking threshold for the inphase component. $BTH_q{}^+$ can describe the upper blanking threshold for the quadrature component. $BTH_q{}^-$ can describe the lower blanking threshold for the quadrature component.

The predefined detection threshold can be set according to a probability of false alarm or a probability of missed detection.

According to a second aspect of the present invention, a computer program is provided comprising instructions which, when the program is executed by a computer, cause the computer to carry out the steps of a method according to the first aspect.

According to a third aspect of the present invention, a storage device stores a computer program according to the second aspect.

According to a fourth aspect of the present invention, a device for noise distribution shaping and signal acquisition of a Code Division Multiple Access (CDMA) signal comprises a demodulator, a signal generator, a blanker and an acquisition processor. The demodulator is adapted to demodulate the CDMA signal by multiplying with a carrier signal modulated with an estimated Doppler frequency. The carrier of the carrier signal is the CDMA signal carrier. The signal generator is adapted to generate a test signal. The test signal has a spreading sequence according to the CDMA signal. The test signal is shifted by an estimated code delay. The blanker is adapted to modify the noise distribution of the CDMA signal to generate a modified CDMA signal by blanking samples of the CDMA signal, when the samples of the CDMA signal exceed an upper or lower blanking threshold. The upper and lower blanking thresholds are offset by a square root of an estimated power ($P_{est}$) of the CDMA signal multiplied by a chip value polarity of the generated test signal and a predefined scaling factor, $\alpha$. The upper blanking threshold is further offset by a positive value and the lower blanking threshold is further offset by a negative value, and the positive and negative values are set by a scaled standard deviation of thermal noise and circumferential interference.

The acquisition processor is adapted to acquire the CDMA signal, when a correlation between the modified CDMA signal and the generated test signal is above a predefined detection threshold.

The blanker can be adapted to be a passive matched filter. Coefficients of the passive matched filter can correspond to the upper and lower blanking thresholds. This has the advantage to avoid a penalizing effect on the mean time to acquire the CDMA signal.

Even if the foregoing described aspects with respect to the method were only described for the method, these aspects can further relate to the foregoing described device and vice versa.

The present invention will be further described in more detail hereinafter with reference to the figures. The figures schematically show:

Figure 1      schematically illustrates a GNSS receiver;

Figure 2      schematically illustrates a device for signal acquisition without a blanker;

Figure 3      schematically illustrates diagrams of different replicas of a CDMA signal;

Figure 4     schematically illustrates adaptive blanking thresholds;

Figure 5     schematically illustrates adaptive blanking thresholds;

Figure 6     schematically illustrates a device according to an embodiment of the present invention;

Figure 7     schematically illustrates a device according to an embodiment of the present invention;

Figure 8     schematically illustrates a device according to an embodiment of the present invention;

Figure 9     schematically illustrates a passive matched filter according to an embodiment of the present invention; and

Figure 10     schematically illustrates a method according to an embodiment of the present invention.

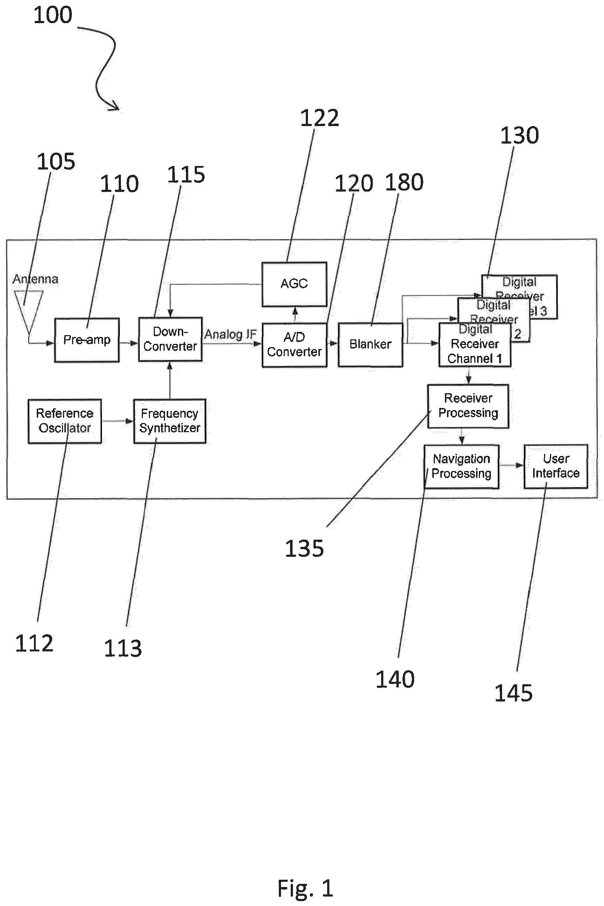

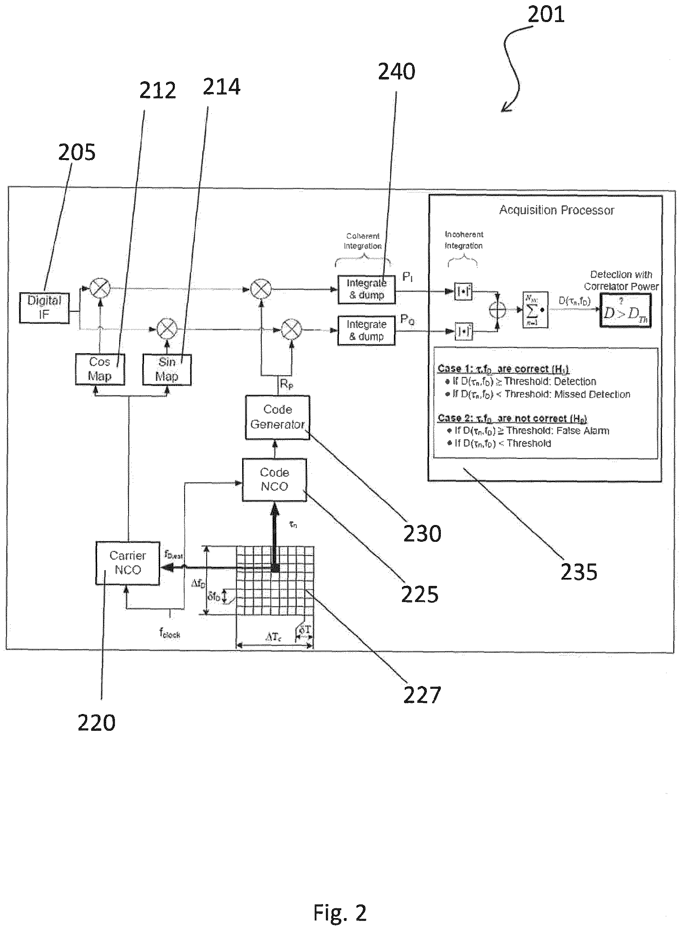

Figure 1 schematically shows a GNSS receiver 100 with main functional blocks. A Code Division Multiple Access (CDMA) signal is first received via an antenna 105. The CDMA signal is then fed to a pre-amplifier stage 110. The pre-amplifier stage 110 aims at increasing the received signal to a level compatible with the following components of the GNSS receiver 100, the receiver front-end respectively. The pre-amplifier stage 110 can comprise a single or several amplifiers mounted in cascade. The first amplifier arranged downstream to the antenna 105 is usually a low noise amplifier (LNA) and is characterized by a small noise figure (NF). The received signal, which is usually in a high frequency domain, for example 1575.42 MHz for GPS C/A signals, is firstly down converted to an intermediate frequency (IF). This downconversion is usually performed before an analogue to digital converter (ADC) 120 via a down converter 115. This step can also be performed in the digital domain, if the sampling frequency of the A/D converter 120 is large enough following the Nyquist condition. In order to perform a down conversion from an RF signal to an IF signal, the RF signal must be multiplied with a cosine at a frequency corresponding to RF-IF, for example 1575.42 MHz - IF. A reference oscillator 112 provides a frequency synthesizer 113 with a reference frequency, which frequency synthesizer 113 is then outputting a desired (RF-IF) signal for the down converter 115 for down conversion from RF to IF. After the signal has been down converted, it is in an IF domain, which is then sampled via the A/D converter 120. Further, an automatic gain control (AGC) 122 is used to adapt the power of the received signal in mere real time. The AGC 122 monitors the power level of the samples and provides information for multiplying the received signal in RF domain with a variable gain. The part before the A/D converter 120 is usually called the analogue front-end, wherein the part downstream to the analogue front-end is usually called digital front-end. In the digital front-end, the output of the ADC 120 is then fed to a blanker 180. The blanker aims at setting samples to zero which contain large interference signals comprised in the received signal. In figure 1 the blanker is implemented in the digital front-end, however the blanker can also be implemented into an analogue front-end. After the blanker 180, the remaining digital samples are then injected to N digital receiver channels, where N represents the number of line-of-sight satellite signals. As for the case of satellite signals, they need to be tracked in order to make a position estimation. This requires position and timing performance, which is usually more accurate using more digital receiver channels 130. Each digital receiver channel 130 aims at processing the IF signals, by first wiping-off the remaining carrier frequency of the received signal. This is necessary for correlator channels provided downstream to the digital receiver channels 130. The correlated channels are necessary for signal acquisition but also for code and carrier estimations and navigation data demodulation. The acquisition process is further described in the following figure 2.

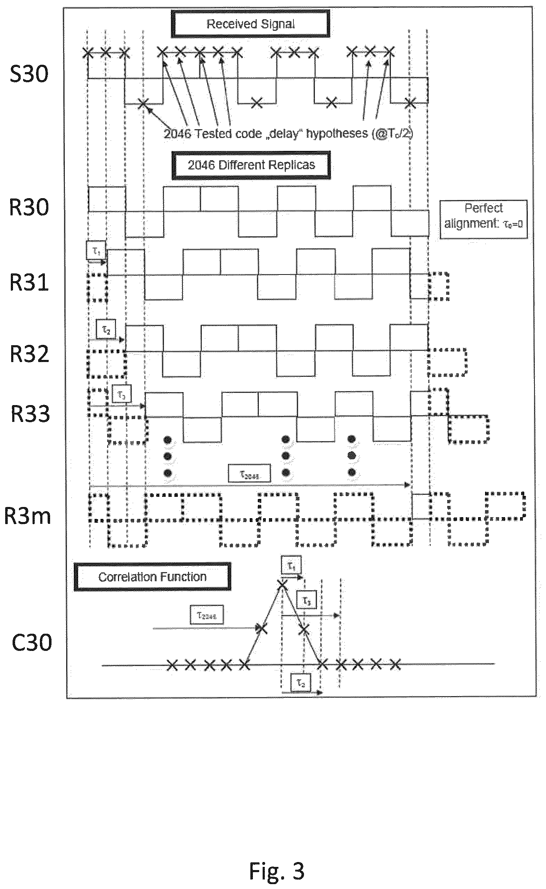

Figure 2 schematically illustrates a device for signal acquisition without a blanker in the digital domain. A digital IF signal from the block Digital IF 205 is provided after an analogue to digital conversion. The aim of the acquisition of a CDMA signal is to estimate roughly a code delay and a Doppler offset of the received signal. For this purpose, a set of code delay estimates and Doppler offset estimates are tested. For each pair of code/Doppler estimates, a replica is firstly generated by shifting the spreading sequence with the corresponding estimated code delay and multiplying the shifted sequence with a carrier modulated at the estimated Doppler frequency. Afterwards, the CDMA signal is correlated with the replica generated with the estimated code delay and Doppler frequency. The correlation is then squared via an incoherent integration and then compared to a threshold either set according to a probability of false alarm or according to a probability of missed-detection. The undesired false alarm is caused by unavoidable thermal noise. When no information about a code delay or a Doppler frequency for the CDMA signal is available, all estimated code delays corresponding to the whole spreading sequence have to be searched. The typical order of magnitude for the estimated Doppler frequencies during a cold start is $\pm 10$ KHz. To limit the code delay and Doppler frequency miss-alignment losses during the correlation process to a few decibels, one estimated code delay is proposed every $T_{c/2}$ or $T_{C/4}$, wherein Tc is the chip duration of a corresponding spreading sequence of the CDMA signal. An estimated Doppler frequency is tested every 50 to 100 Hz. As an example for the GPS C/A signal having a spreading sequence containing 1023 chips, at least 2046 estimated code delays can be tested. Those sampling intervals for the estimated code delay and Doppler frequencies are called respectively code and Doppler binwidths. To improve the performances for this conventional acquisition, it is possible to add non-coherently the detector output for successive correlation of the received signal with the same replica generated with the estimate code delay and Doppler frequency offset to be tested. Due to the non-coherent summations, so called squaring losses have to be taken into account. To avoid such squaring losses, it is possible to increase the coherent correlation time. This means, that the replica and received signals are correlated over longer correlation time, but in that case the code delay miss-alignment losses will increase. The principle is described in figure 2 in more detail with the corresponding functional blocks. The digital IF 205 delivers the CDMA signal, which is then demodulated via a cosine 212 and a sine 214. The cosine 212 and the sine 214 are two functions 90 degree phase shifted to each other, which lead the CDMA signal to have an inphase and quadrature component. Further, the square grid 227 symbolizes estimated code delays and Doppler frequencies. An estimated Doppler frequency is modulated with the CDMA signal carrier in order to derive the inphase and quadrature component by demodulation of the digital IF signal. The test signals, the so called replicas, with the estimated code delays are generated via the Code NCO 225 and the Code Generator 230. The test signals are then correlated with the inphase and quadrature component of the CDMA signal via a coherent integration 240. In the acquisition processor 235 an incoherent integration and summation leads to a comparing result which is then compared to a detection threshold. In the following figure 3, different replicas (test signals) and the corresponding received signal are schematically illustrated with a corresponding correlation function.

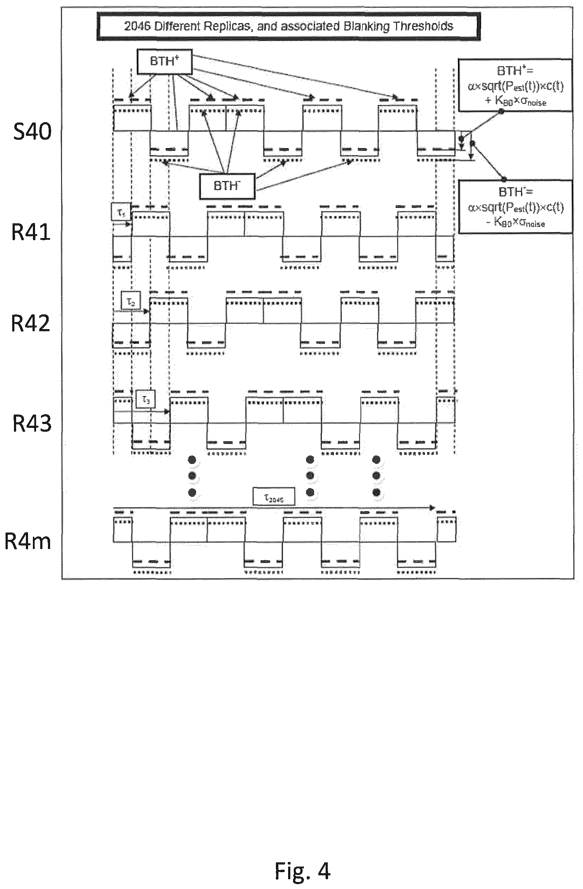

Figure 3 schematically illustrates diagrams of different replicas of a CDMA signal. A typical example of a situation for signal acquisition via a correlation process using replicas, so called test signals, in order to derive a correlation function. The received signal S30 is illustrated on top of figure 3 with 2046 tested code delay hypothesis, the so called estimated code delay. Those code delay hypothesis are $T_{c/2}$ part. This is symbolized via crosses. R30, R31, R32, R33 until R3M describe the 2046 different replicas. These replicas lead to a correlation function resulting in C30. The best case is represented by the exact estimated code delay at the peak of the correlation function. The further estimated code delays lead to smaller correlation results indicating that the estimated code delay is not matching the CDMA signal. The signal acquisition is then extended by an adaptive blanker in figure 4.

Figure 4 schematically illustrates the use of an adaptive blanker according to an embodiment of the present invention. S40 illustrates a received CDMA signal with respective upper and lower blanking thresholds BTH$^+$ and BTH$^-$. BTH$^+$ describes the upper blanking threshold, wherein BTH$^-$ describes the lower blanking threshold. The remaining signals R41 until R4M describe the test signals with corresponding estimated code delays. Two blanking thresholds BTH$^+$ and BTH$^-$ are built based on an initial blanking threshold B0 and an offset $\beta$. According to the claimed invention, the initial blanking threshold B0 is expressed as a product of the standard deviation of the thermal noise and additional interference contribution ($\sigma_{noise}$) comprised in the received CDMA signal and a scaling factor KB0, such that B0 = KB0 * $\sigma_{noise}$. The offset $\beta$ can be expressed as a product between the square root of an estimated received signal power $P_{s,est}$, the polarity of the chips of the spreading sequence, C(T), and a scaling factor $\alpha$. T describes the time expressed in the time scale of the receiver. This leads to $\beta = \alpha$ * square root $(P_{S,est}(t))$ * C(T). The upper blanking threshold BTH$^+$ and the lower blanking threshold BTH$^-$ can be set as follows:

$$BTH^+(t) = \beta + B0 = \alpha \times sqrt(P_{s,est}(t)) \times c(t) + K_{B0} \times \sigma_{noise}$$

$$BTH^-(t) = \beta - B0 = \alpha \times sqrt(P_{s,est}(t)) \times c(t) - K_{B0} \times \sigma_{noise}$$

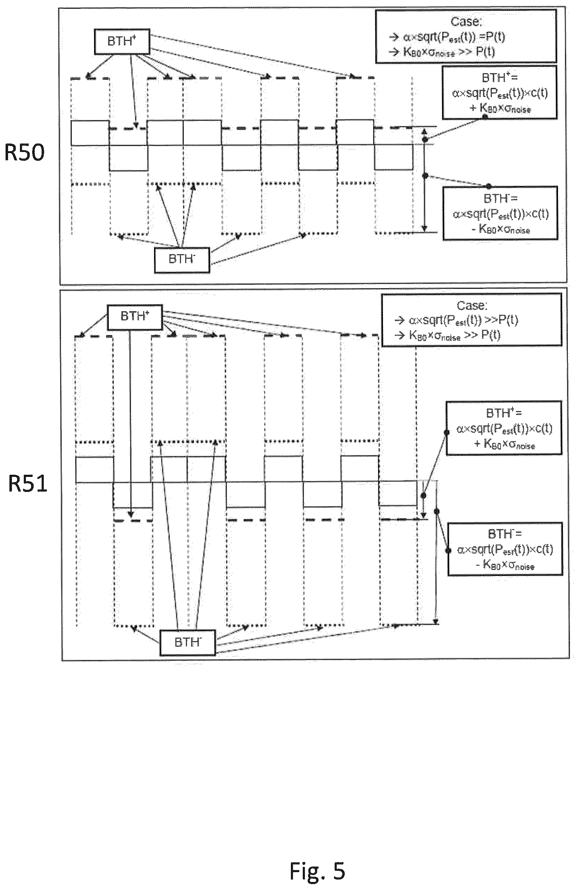

Both thresholds BTH+ and BTH- vary according to the chip polarity, for example the chip value, and vary at each chip transition, which are spaced by $T_c$, if a polarity of consecutive chips are of opposite sign. Under consideration of a true code delay of the CDMA signal between two estimated code delays, for example $T_{c/4}$, these two closest estimated code delays are the ones which will lead to highest values of the detector output. This is referred to maximal energy. If the detector output recites below the detection threshold, then a missed-detection can be declared, else a detection is achieved. All other 2046-2 = 2044 test signals correspond to wrong alignments of the CDMA signal and the corresponding 2044 wrong test signals. If the detector outputs recite above the detection threshold, false alarm is declared. In the best case scenario, if one of the 2046 estimated code delays exactly matches the true code delay of the CDMA signal, the corresponding correlation function will be maximal at a peak. If the detector output for this exact match recites below the detection threshold a missed-detection is declared. For the 2046-1 = 2045 other tested estimated code delays, if the detector outputs recite above the detection threshold, a false alarm is declared. In figure 4 the upper and lower blanking thresholds are perfectly symmetrical to the chip values. This corresponds to the scenario, wherein the estimated power exactly matches the true CDMA signal power $P_{est}$ = P and $\alpha$ = 1. Both upper and lower blanking thresholds are very close to the chip amplitude. This means, that either $\sigma_{noise}$ is very small with respect to the CDMA signal amplitude [square root (P) (and $K_{B0} = 1$)], which is not a usual case for satellite navigation signals. The usual case for satellite navigation signals is $\sigma^2_{noise} << P$, or $K_B >> 1$ with $\sigma^2_{noise} << P$. Other settings for blanking thresholds are schematically illustrated in figure 5.

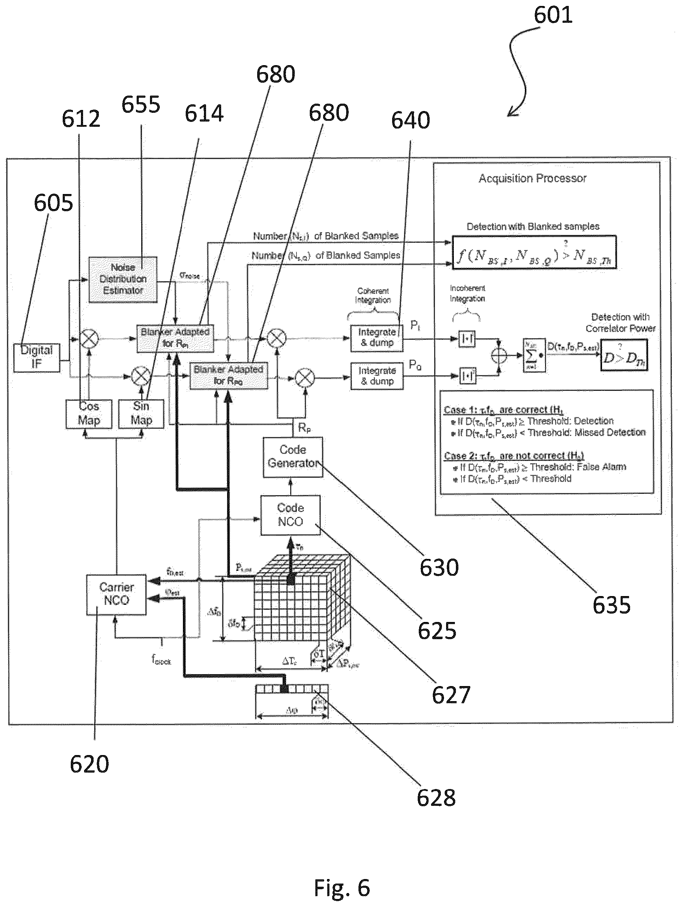

Figure 5 schematically illustrates two different blanking threshold adaptation settings. Two different scenarios of applied blanking thresholds are illustrated in the respective upper R50 and lower R51 plot. In R50, the upper and lower blanking thresholds are aligned above or below with respect to the functional slope of the test signal. In the case of R51, the upper and lower thresholds are above the test signal for positive chip values of the spreading sequence and are below the functional slope for negative chip values of the spreading sequence. In the case of R50 the scaled estimated amplitude according to a square root of an estimated power corresponds exactly to the received signal power. In the case of R51 the scaled estimated amplitude according to a square root of an estimated power is much greater than the actual CDMA signal power. In both cases R50 and R51 the scaled noise distribution is much greater than the actual signal power of the CDMA signal. The upper and lower blanking thresholds BTH+ and BTH- in figure 5 are no more symmetrical with respect to the true chip amplitude [square root (P (t))], contrary to the scenario in figure 4. The reason lies in that the receiver also ignores the exact signal power or a signal amplitude in a cold acquisition, for example without a priori information about the code delay, Doppler frequency or signal power. In the same way that the receiver tests different estimated code delays during acquisition, which leads to an adaptation of the upper and lower blanking thresholds, the receiver also has to test different estimated signal amplitudes according to a square root of an estimated power. This will further discipline the amplitude of the upper and lower blanking thresholds. Hence, in acquisition processing with such an adaptive blanker, a third degree of freedom with the signal power is introduced besides estimated code delays and Doppler frequencies. Although, intuition would have expected at the acquisition performances are the best when the tested signal power ($P_{est}$) is close or very close to the actual signal power of the CDMA signal ($P_{est} \sim P$), it appears from simulations that in fact detection performances are best when the tested signal power is significantly larger than the actual signal power of the CDMA signal, for example 1000 times larger than the actual signal power of the CDMA signal. The following figure 6 provides the adaptation of a conventional digital receiver channel used for acquisition with the implementations of an adaptive blanker introduced in figures 4 and 5.

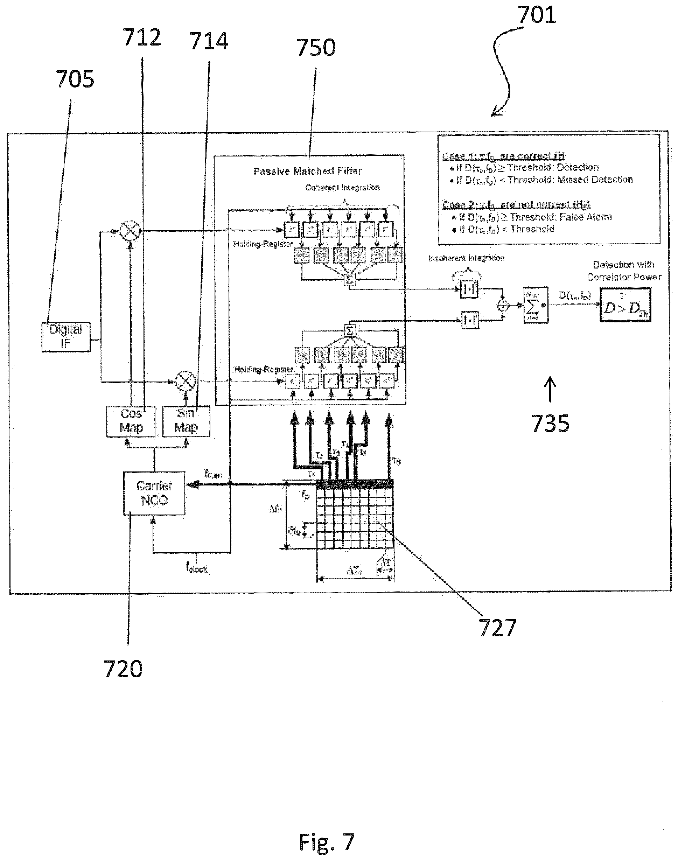

Figure 6 schematically illustrates the acquisition process for a CDMA signal according to an embodiment of the present invention. The digital IF 605 delivers the CDMA signal which is then demodulated by the COS map 612 and SIN map 614 leading to an inphase and quadrature component. The COS map 612 and the SIN map 614 demodulate the digital IF signal to a base band via a Carrier NCO 620 comprising additional estimated Doppler frequencies and estimated phase shifts from the illustrated cubicle 627 and estimated phase shifts 628. A noise distribution estimator 655 estimates the noise distribution, which is then fed to an adaptive blanker 680. The adaptive blanker is further provided by the cubicle 627 with the estimated signal power $P_{est}$. After blanking of the inphase and quadrature component of the CDMA signal, the inphase and quadrature components of the CDMA signal are correlated with the test signals. The test signals have been generated by a code NCO 625 and a code generator 630. The cubicle 627 schematically illustrates and symbolizes the three dimensions which have to be investigated for signal acquisition according to the present invention. After correlation the signal can be detected, when the detector indicates that the test signal is the most similar signal with respect to the CDMA signal. If the detector does not give relevant feedback, the acquisition process can include another detection process. This process comprises detection with the number of blanked samples. The number of blanked samples can indicate alignment of the received signal and the test signal. This kind of active acquisition is characterized by the fact that a snapshot of the received CDMA signal is correlated over a coherent integration time with a test signal generated with an estimated code delay, estimated Doppler frequency and estimated power for the same integration time. Hence, for each new set of estimated code delay, estimated Doppler frequency and estimated power to be tested, a new snapshot of the received CDMA signal is tested. The advantage of the active correlation is that the detector outputs are independent from each newly tested set of hypotheses. This yields better statistical results according to the detector. The drawback is that for each newly tested hypothesis the integration time multiplied with a number of non-coherent summations, also called dwell time, has to be spent. This reduces the mean time to acquire the CDMA signal. To avoid this penalizing effect on the mean time to acquire the CDMA signal, another architecture is illustrated in figure 7.

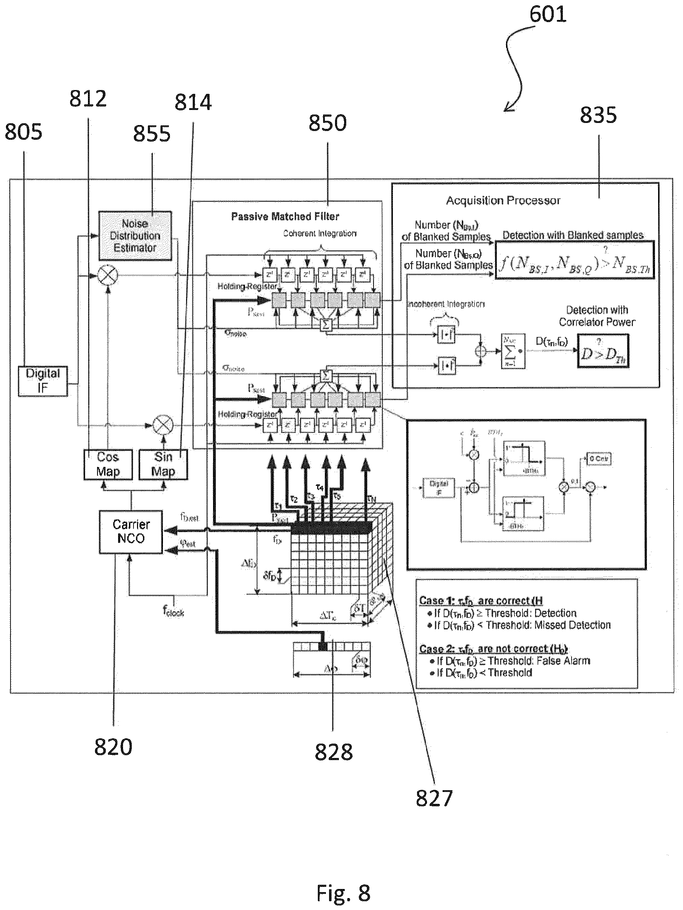

In figure 7 another architecture called passive matched filter is introduced. In the passive matched filter 750 the received CDMA signal is directed to a delay line made of shift registers. The output of each shift register is then multiplied with a coefficient corresponding to the spreading code to be tested. The number of shifter registers and coefficients correspond to the number of estimated code delays to be tested per chip multiplied with the number of chips in the spreading sequence. For example 2046 shift registers in the case of two code hypothesis for each chip of the GPS C/A sequence. Then, the outputs of the shift registers multiplied by the chip coefficients are added and directed to the power detector 735. This is performed for both inphase and quadrature components for the active acquisition technique. Each new entering sample, a new estimated code delay is tested. This is symbolized by different arrows originating from the code delay grid 727. This principle is further extended in figure 8.

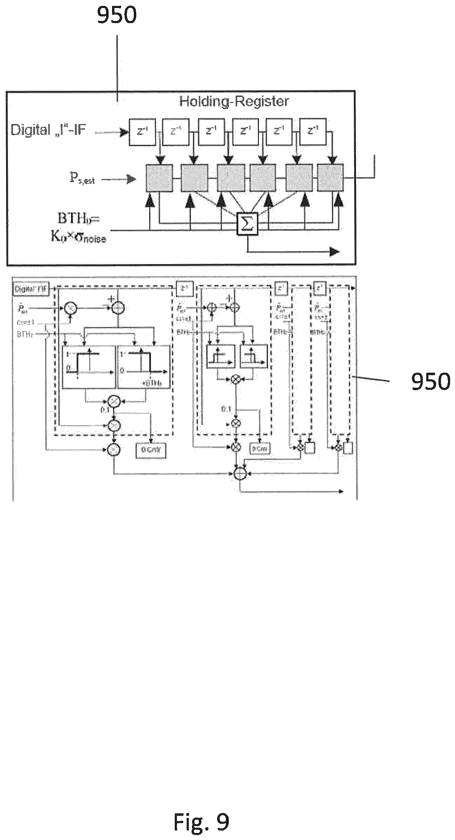

Figure 8 schematically illustrates the acquisition process according to an embodiment of the present invention with added noise distribution estimator 855 and the passive matched filter 850 according to figure 7. The code delay grid of figure 7 is replaced by a cubicle 827 corresponding to the cubicle in figure 6. The principle corresponds to the principle, which was introduced in figure 7. The coefficient cells, so called coefficients, are replaced by another cell implementing the two blanking thresholds, the upper and lower blanking thresholds. These upper and lower blanking thresholds are derived from the chip polarity ($c(t)$), the power to be tested ($P_{s,\,est}$), the estimated noise standard deviation ($\sigma_{noise}$). A more detailed illustration is given by figure 9. Figure 9 schematically illustrates a part of the passive matched filter 950 for further illustration. Even if the estimated Doppler frequency would exactly match the actual (true) Doppler frequency of the received CDMA signal, it cannot be ensured that the major part of the signal power recites on the inphase branch, which is referred to the inphase component of the CDMA signal. It can further not be ensured that the quadrature branch, which is referred to the quadrature component, merely contains a residual part of the signal power. In order to ensure that the upper and lower blanking thresholds both applied on the inphase and quadrature branch are synchronized to the actual signal, a fourth degree of freedom, namely a carrier phase is introduced. This is shown in figures 6 and 8. In that case both upper and lower blanking thresholds for the inphase and quadrature branches are expressed as:

- $$\dot{BTH_I^+}(t) = \beta + B0 = \alpha \times sqrt(P_{s,est}(t)) \times c(t) \times \cos(2\pi f_{D,est} \times t + \varphi_{est}) + K_{B0} \times \sigma_{noise}$$

- $$\dot{BTH_I^-}(t) = \beta - B0 = \alpha \times sqrt(P_{s,est}(t)) \times c(t) \times \cos(2\pi f_{D,est} \times t + \varphi_{est}) - K_{B0} \times \sigma_{noise}$$

- $$\dot{BTH_Q^+}(t) = \beta + B0 = \alpha \times sqrt(P_{s,est}(t)) \times c(t) \times \sin(2\pi f_{D,est} \times t + \varphi_{est}) + K_{B0} \times \sigma_{noise}$$

- $$\dot{BTH_Q^-}(t) = \beta - B0 = \alpha \times sqrt(P_{s,est}(t)) \times c(t) \times \sin(2\pi f_{D,est} \times t + \varphi_{est}) - K_{B0} \times \sigma_{noise}$$

This principle can then be extended by analyzing a number of blanked samples for each set of estimated code delay, estimated Doppler frequency and estimated power. As a consequence on figures 6 and 8, the number of blanked samples is collected for each branch, the inphase and quadrature branch. Then, this number is compared to a threshold which will help taking a decision regarding the right estimated code delay, estimated Doppler frequency and estimated power. The number of blanked samples can also represent a figure of merit which enables a further detection method of the right estimation of code delay, Doppler frequency and signal power of the received CDMA signal.

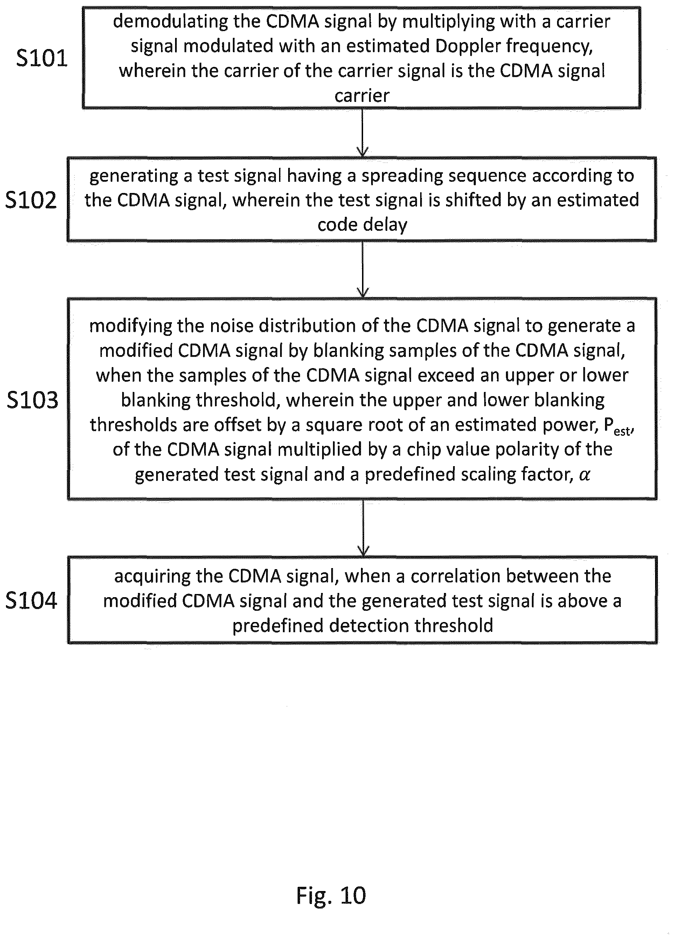

Figure 10 schematically illustrates a method of noise distribution shaping for signal acquisition of a Code Division Multiple Access (CDMA) signal according to an embodiment of the present invention. The method comprises demodulating S101 the CDMA signal by multiplying with a carrier signal modulated with an estimated Doppler frequency. The carrier of the carrier signal is the CDMA signal carrier. The method further comprises generating S102 a test signal. The test signal has a spreading sequence according to the CDMA signal. The test signal is shifted by an estimated code delay. The method further comprises modifying S103 the noise distribution of the CDMA signal to generate a modified CDMA signal by blanking samples of the CDMA signal, when the samples of the CDMA signal exceed an upper or lower blanking threshold. The upper and lower blanking thresholds are offset by a square root of an estimated power ($P_{est}$) of the CDMA signal multiplied by a chip value polarity of the generated test signal and a predefined scaling factor ($\alpha$). $\alpha$ is positive, negative, constant, time dependent, or changing its sign over time as function of the generated test signal. The method further comprises acquiring S104 the CDMA signal, when a correlation between the modified CDMA signal and the generated test signal is above a predefined detection threshold.

**Claims**

1. A method of noise distribution shaping for signal acquisition of a Code Division Multiple Access, CDMA, signal the method comprising:

   demodulating (S101) the CDMA signal by multiplying with a carrier signal modulated with an estimated Doppler frequency, wherein the carrier of the carrier signal is the CDMA signal carrier;
   generating (S102) a test signal having a spreading sequence according to the CDMA signal, wherein the test signal is shifted by an estimated code delay;
   modifying (S103) the noise distribution of the CDMA signal to generate a modified CDMA signal by blanking samples of the CDMA signal, when the samples of the CDMA signal exceed an upper or lower blanking threshold, wherein the upper and lower blanking thresholds are offset by a square root of an estimated power, $P_{est}$, of the CDMA signal multiplied by a chip value polarity of the generated test signal and a predefined scaling factor, $\alpha$, wherein the upper blanking threshold is further offset by a positive value and the lower blanking threshold is further offset by a negative value, and wherein the positive and negative values are set by a scaled standard deviation of thermal noise and circumferential interference; and

acquiring (S104) the CDMA signal, when a correlation between the modified CDMA signal and the generated test signal is above a predefined detection threshold.

2. The method according to claim 1, wherein $\alpha$ is positive, negative, constant, time dependent, or changing its sign over time as function of the generated test signal.

3. The method according to claims 1 or 2, wherein the carrier signal is further shifted by an estimated carrier phase.

4. The method according to any one of the foregoing claims, wherein the estimated power, $P_{est}$, is an estimate of the CDMA signal power or is an estimate being at least 1000 times greater than the CDMA signal power.

5. The method according to any one of the foregoing claims, wherein the number of blanked samples indicates detection of the CDMA signal according to the estimated carrier phase, the estimated Doppler frequency, the estimated code delay and/or the estimated power, $P_{est}$.

6. The method according to any one of the foregoing claims, wherein demodulating comprises:
separating the CDMA signal into an inphase and a quadrature component by multiplying the CDMA signal with two carrier signals phase-shifted by ninety-degree to each other, each of the two carrier signals having a carrier frequency of the CDMA signal, wherein the carrier frequency is shifted by an estimated Doppler frequency; wherein modifying comprises:
modifying the noise distribution of the CDMA signal to generate a modified CDMA signal by blanking samples of the inphase and quadrature components, when the samples of the inphase and quadrature component exceed an upper or lower blanking threshold, wherein the upper and lower blanking thresholds are offset by a square root of an estimated power, $P_{est}$, of the CDMA signal multiplied by a chip value polarity of the generated test signal and a predefined scaling factor, $\alpha$, wherein the upper blanking threshold is further offset by a positive value and the lower blanking threshold is further offset by a negative value, and wherein the positive and negative values are set by a scaled standard deviation of thermal noise and circumferential interference; and wherein acquiring comprises:
acquiring the CDMA signal, when a correlation between the CDMA signal according to the inphase and quadrature component and the generated test signal is above a predefined detection threshold.

7. The method according to claim 6, wherein the upper and lower blanking thresholds are offset according to the estimated Doppler frequency.

8. The method according to claims 6 or 7, wherein the upper and lower blanking thresholds are offset according to the estimated carrier phase.

9. The method according to any one of the foregoing claims, wherein the predefined detection threshold is set according to a probability of false alarm or a probability of missed detection.

10. A computer program comprising instructions which, when the program is executed by a computer, cause the computer to carry out the steps of the method of any one of the preceding claims.

11. A storage device storing a computer program according to claim 10.

12. A device (201) for noise distribution shaping and signal acquisition of a Code Division Multiple Access, CDMA, signal, comprising:

a demodulator adapted to demodulate the CDMA signal by multiplying with a carrier signal modulated with an estimated Doppler frequency, wherein the carrier of the carrier signal is the CDMA signal carrier;
a signal generator (225, 230) adapted to generate a test signal having a spreading sequence according to the CDMA signal, wherein the test signal is shifted by an estimated code delay;
a blanker (180) adapted to modify the noise distribution of the CDMA signal to generate a modified CDMA signal by blanking samples of the CDMA signal, when the samples of the CDMA signal exceed an upper or lower blanking threshold, respectively, wherein the upper and lower blanking thresholds are offset by a square root of an estimated power, $P_{est}$, of the CDMA signal multiplied by a chip value polarity of the generated test signal and a predefined scaling factor, $\alpha$, wherein the upper blanking threshold is further offset by a positive value and the lower blanking threshold is further offset by a negative value, and wherein the positive and negative values are set by a scaled standard deviation of thermal noise and circumferential interference; and

an acquisition processor (235) adapted to acquire the CDMA signal, when a correlation between the modified CDMA signal and the generated test signal is above a predefined detection threshold.

13. The device according to claim 12, wherein the blanker (180) is adapted to be a passive matched filter (750), and wherein coefficients of the passive matched filter (750) correspond to the upper and lower blanking thresholds.

**Patentansprüche**

1. Verfahren zur Rauschverteilungsformung für eine Signalerfassung eines Code Division Multiple Access, CDMA, -Signals, wobei das Verfahren umfasst:

Demodulation (S101) des CDMA-Signals durch Multiplikation mit einem mit einer geschätzten Dopplerfrequenz modulierten Trägersignal, wobei der Träger des Trägersignals der CDMA-Signalträger ist;
Erzeugen (S102) eines Testsignals mit einer Spreizsequenz gemäß dem CDMA-Signal, wobei das Testsignal um eine geschätzte Codeverzögerung verschoben wird;
Modifizieren (S103) der Rauschverteilung des CDMA-Signals, um ein modifiziertes CDMA-Signal zu erzeugen, indem Abtastwerte des CDMA-Signals ausgeblendet werden, wenn die Abtastwerte des CDMA-Signals einen oberen oder unteren Ausblendungsschwellenwert überschreiten, wobei der obere und der untere Ausblendungsschwellenwert durch eine Quadratwurzel einer geschätzten Leistung, $P_{est}$, des CDMA-Signals versetzt sind, multipliziert mit einer Chipwert-Polarität des erzeugten Testsignals und einem vordefinierten Skalierungsfaktor, a, wobei der obere Ausblendungsschwellenwert ferner um einen positiven Wert versetzt wird und der untere Ausblendungsschwellenwert ferner um einen negativen Wert versetzt wird, und wobei die positiven und negativen Werte durch eine skalierte Standardabweichung von thermischem Rauschen und Umfangsinterferenz festgelegt werden; und
Erfassen (S104) des CDMA-Signals, wenn eine Korrelation zwischen dem modifizierten CDMA-Signal und dem erzeugten Testsignal über einer vordefinierten Erfassungsschwelle liegt.

2. Verfahren nach Anspruch 1, wobei a positiv, negativ, konstant, zeitabhängig ist oder sein Vorzeichen über der Zeit als Funktion des erzeugten Testsignals ändert.

3. Verfahren nach Anspruch 1 oder 2, wobei das Trägersignal um eine geschätzte Trägerphase weiter verschoben wird.

4. Verfahren nach einem der vorhergehenden Ansprüche, wobei die geschätzte Leistung, $P_{est}$, eine Schätzung der CDMA-Signalleistung ist oder eine Schätzung ist, die mindestens 1000-mal größer als die CDMA-Signalleistung ist.

5. Verfahren nach einem der vorhergehenden Ansprüche, wobei die Anzahl von ausgeblendeten Abtastwerten eine Erkennung des CDMA-Signals gemäß der geschätzten Trägerphase, der geschätzten Dopplerfrequenz, der geschätzten Codeverzögerung und/oder der geschätzten Leistung, $P_{est}$, anzeigt.

6. Verfahren nach einem der vorhergehenden Ansprüche, wobei die Demodulation umfasst:
Trennen des CDMA-Signals in eine Inphase- und eine Quadraturkomponente durch Multiplizieren des CDMA-Signals mit zwei um neunzig Grad zueinander phasenverschobenen Trägersignalen, wobei jedes der beiden Trägersignale eine Trägerfrequenz des CDMA-Signals aufweist, wobei die Trägerfrequenz um eine geschätzte Dopplerfrequenz verschoben ist; wobei das Modifizieren umfasst:
Modifizieren der Rauschverteilung des CDMA-Signals, um ein modifiziertes CDMA-Signal zu erzeugen, indem Abtastwerte der Inphase- und Quadraturkomponente ausgeblendet werden, wenn die Abtastwerte der Inphase- und Quadraturkomponente einen oberen oder unteren Ausblendungsschwellenwert überschreiten, wobei der obere und der untere Ausblendungsschwellenwert durch eine Quadratwurzel einer geschätzten Leistung, $P_{est}$, des CDMA-Signals versetzt sind, multipliziert mit einer Chipwert-Polarität des erzeugten Testsignals und einem vordefinierten Skalierungsfaktor, a, versetzt sind, wobei der obere Ausblendungsschwellenwert ferner um einen positiven Wert und der untere Ausblendungsschwellenwert ferner um einen negativen Wert versetzt ist, und wobei die positiven und negativen Werte durch eine skalierte Standardabweichung von thermischem Rauschen und Umfangsinterferenz festgelegt sind; und wobei ein Erfassen umfasst:
Erfassen des CDMA-Signals, wenn eine Korrelation zwischen dem CDMA-Signal gemäß der Inphasen- und Quadraturkomponente und dem erzeugten Testsignal über einer vordefinierten Erfassungsschwelle liegt.

**7.** Verfahren nach Anspruch 6, wobei der obere und der untere Ausblendungsschwellenwert entsprechend der geschätzten Dopplerfrequenz versetzt sind.

**8.** Verfahren nach Anspruch 6 oder 7, wobei die oberen und unteren Ausblendungsschwellenwerte entsprechend der geschätzten Trägerphase versetzt sind.

**9.** Verfahren nach einem der vorhergehenden Ansprüche, wobei der vordefinierte Erfassungsschwellenwert in Abhängigkeit von einer Wahrscheinlichkeit eines Fehlalarms oder einer Wahrscheinlichkeit einer nicht erfolgten Erkennung festgelegt wird.

**10.** Computerprogramm mit Anweisungen, die, wenn das Programm von einem Computer ausgeführt wird, den Computer veranlassen, die Schritte des Verfahrens nach einem der vorhergehenden Ansprüche auszuführen.

**11.** Speichergerät, das ein Computerprogramm nach Anspruch 10 speichert.

**12.** Vorrichtung (201) zur Rauschverteilungsformung und Signalerfassung eines Code Division Multiple Access, CDMA, -Signals, die umfasst:

einen Demodulator, der das CDMA-Signal durch Multiplikation mit einem mit einer geschätzten Dopplerfrequenz modulierten Trägersignal demodulieren kann, wobei der Träger des Trägersignals der CDMA-Signalträger ist;
einen Signalgenerator (225, 230), der geeignet ist, ein Testsignal mit einer Spreizsequenz entsprechend dem CDMA-Signal zu erzeugen, wobei das Testsignal um eine geschätzte Codeverzögerung verschoben wird;
eine Ausblendeinrichtung (180), die eingerichtet ist, die Rauschverteilung des CDMA-Signals zu modifizieren, um ein modifiziertes CDMA-Signal durch Ausblenden von Abtastwerten des CDMA-Signals zu erzeugen, wenn die Abtastwerte des CDMA-Signals jeweils eine obere oder untere Ausblendschwelle überschreiten, wobei die obere und die untere Ausblendschwelle durch eine Quadratwurzel einer geschätzten Leistung, $P_{est}$, des CDMA-Signals versetzt sind, multipliziert mit einer Chipwert-Polarität des erzeugten Testsignals und einem vordefinierten Skalierungsfaktor, $\alpha$, , wobei die obere Ausblendungsschwelle ferner um einen positiven Wert versetzt wird und die untere Ausblendungsschwelle ferner um einen negativen Wert versetzt wird, und wobei die positiven und negativen Werte durch eine skalierte Standardabweichung des thermischen Rauschens und der Umfangsinterferenz festgelegt werden; und
einen Erfassungsprozessor (235), der so ausgebildet ist, dass er das CDMA-Signal erfasst, wenn eine Korrelation zwischen dem modifizierten CDMA-Signal und dem erzeugten Testsignal oberhalb einer vordefinierten Erfassungsschwelle liegt.

**13.** Vorrichtung nach Anspruch 12, wobei die Ausblendeeinrichtung (180) als passives angepasstes Filter (750) ausgebildet ist und wobei die Koeffizienten des passiven angepassten Filters (750) den oberen und unteren Ausblendschwellen entsprechen.

**Revendications**

**1.** Procédé de la mise en forme de la distribution de bruit pour l'acquisition d'un signal d'accès multiple par répartition en code, AMRC, le procédé comprenant:

la démodulation (S101) du signal AMRC en le multipliant par un signal de porteuse modulé avec une fréquence Doppler estimée, la porteuse du signal de porteuse étant la porteuse du signal AMRC;
la génération (S102) d'un signal d'essai comportant une séquence d'étalement en fonction du signal AMRC, le signal d'essai étant décalé d'un retard de code estimé;
la modification (S103) de la distribution du bruit du signal AMRC pour générer un signal AMRC modifié en supprimant des échantillons du signal AMRC, lorsque les échantillons du signal AMRC dépassent un seuil de suppression supérieur ou inférieur, les seuils de suppression supérieur et inférieur étant décalés d'une racine carrée d'une puissance estimée, $P_{est}$, du signal AMRC multipliée par une polarité de valeur de puce du signal d'essai généré et un facteur d'échelle prédéfini, a, dans lequel le seuil de suppression supérieur est en outre décalé d'une valeur positive et le seuil de suppression inférieur est en outre décalé d'une valeur négative, et dans lequel les valeurs positives et négatives sont fixées par un écart type mis à l'échelle du bruit thermique et de l'interférence circonférentielle; et

l'acquisition (S104) du signal AMRC, lorsqu'une corrélation entre le signal AMRC modifié et le signal d'essai généré est supérieure à un seuil de détection prédéfini.

2. Procédé selon la revendication 1, dans lequel α est positif, négatif, constant, dépendant du temps ou changeant de signe dans le temps en fonction du signal d'essai généré.

3. Procédé selon la revendication 1 ou 2, dans lequel le signal de la porteuse est en outre décalé d'une phase estimée de la porteuse.

4. Procédé selon l'une quelconque des revendications précédentes, dans lequel la puissance estimée, $P_{est}$, est une estimation de la puissance du signal AMRC ou une estimation au moins 1000 fois supérieure à la puissance du signal AMRC.

5. Procédé selon l'une quelconque des revendications précédentes, dans lequel le nombre d'échantillons supprimés indique la détection du signal AMRC en fonction de la phase porteuse estimée, de la fréquence Doppler estimée, du retard de code estimé et/ou de la puissance estimée, $P_{est}$.

6. Procédé selon l'une quelconque des revendications précédentes, dans lequel la démodulation comprend:
la division du signal AMRC en une composante en phase et une composante en quadrature en multipliant le signal AMRC par deux signaux de porteuse déphasés de quatre-vingt-dix degrés l'un par rapport à l'autre, chacun des deux signaux de porteuse ayant une fréquence porteuse du signal AMRC, la fréquence porteuse étant décalée d'une fréquence Doppler estimée; dans lequel la modification comprend:
la modification de la distribution du bruit du signal AMRC pour générer un signal AMRC modifié en supprimant des échantillons de la composante en phase et des composantes en quadrature, lorsque les échantillons de la composante en phase et de la composant en quadrature dépassent un seuil de suppression supérieur ou inférieur, les seuils de suppression supérieur et inférieur étant décalés d'une racine carrée d'une puissance estimée, $P_{est}$, du signal AMRC multipliée par une polarité de valeur de puce du signal d'essai généré et un facteur d'échelle prédéfini, a, dans lequel le seuil de suppression supérieur est en outre décalé d'une valeur positive et le seuil de suppression inférieur est en outre décalé d'une valeur négative, et dans lequel les valeurs positives et négatives sont fixées par un écart type mis à l'échelle du bruit thermique et de l'interférence circonférentielle; et dans lequel l'acquisition comprend:
l'acquisition du signal AMRC, lorsqu'une corrélation entre le signal AMRC modifié en fonction de la composante en phase et de quadrature et le signal d'essai généré est supérieure à un seuil de détection prédéfini.

7. Procédé selon la revendication 6, dans lequel les seuils de suppression supérieur et inférieur sont décalés en fonction de la fréquence Doppler estimée.

8. Procédé selon la revendication 6 ou 7, dans lequel les seuils de suppression supérieur et inférieur sont décalés en fonction de la phase estimée de la porteuse.

9. Procédé selon l'une quelconque des revendications précédentes, dans lequel le seuil de détection prédéfini est fixé en fonction d'une probabilité de fausse alarme ou d'une probabilité de détection manquée.

10. Programme informatique comprenant des instructions qui, lorsque le programme est exécuté par un ordinateur, amènent l'ordinateur à réaliser les étapes du procédé selon l'une quelconque des revendications précédentes.

11. Dispositif de mémoire stockant un programme informatique selon la revendication 10.

12. Dispositif (201) pour la mise en forme de la distribution de bruit pour l'acquisition d'un signal d'accès multiple par répartition en code, AMRC, le procédé comprenant:

un démodulateur conçu pour démoduler le signal AMRC en le multipliant par un signal de porteuse modulé avec une fréquence Doppler estimée, la porteuse du signal de porteuse étant la porteuse du signal AMRC;
un générateur de signal (225, 230) conçu pour générer un signal d'essai comportant une séquence d'étalement en fonction du signal AMRC, le signal d'essai étant décalé d'un retard de code estimé;

un éliminateur (180) conçu pour modifier la distribution du bruit du signal AMRC pour générer un signal AMRC modifié en supprimant des échantillons du signal AMRC, lorsque les échantillons du signal AMRC dépassent un seuil de suppression supérieur ou inférieur, les seuils de suppression supérieur et inférieur étant décalés d'une racine carrée d'une puissance estimée, $P_{est}$, du signal AMRC multipliée par une polarité de valeur de puce du signal d'essai généré et un facteur d'échelle prédéfini, a, dans lequel le seuil de suppression supérieur est en outre décalé d'une valeur positive et le seuil de suppression inférieur est en outre décalé d'une valeur négative, et dans lequel les valeurs positives et négatives sont fixées par un écart type mis à l'échelle du bruit thermique et de l'interférence circonférentielle; et

un processeur d'acquisition (235) conçu pour acquérir le signal AMRC, lorsqu'une corrélation entre le signal AMRC modifié et le signal d'essai généré est supérieure à un seuil de détection prédéfini.

13. Dispositif selon la revendication 12, dans lequel l'éliminateur (180) est conçu pour être un filtre passif adapté (750), et dans lequel les coefficients du filtre passif adapté (750) correspondent aux seuils d'élimination inférieur et supérieur.

100

122

130

105

110   115

120 180

Antenna

Pre-amp

Down-Converter

Analog IF

AGC

A/D Converter

Blanker

Digital Receiver Channel 3

Digital Receiver 2

Digital Receiver Channel 1

Reference Oscillator

Frequency Synthetizer

Receiver Processing

Navigation Processing

User Interface

135

112   113

140   145

Fig. 1

Fig. 2

14

Fig. 3

Fig. 4

Fig. 5

Fig. 6

Fig. 7

Fig. 8

950

950

Fig. 9

S101 | demodulating the CDMA signal by multiplying with a carrier signal modulated with an estimated Doppler frequency, wherein the carrier of the carrier signal is the CDMA signal carrier

S102 | generating a test signal having a spreading sequence according to the CDMA signal, wherein the test signal is shifted by an estimated code delay

S103 | modifying the noise distribution of the CDMA signal to generate a modified CDMA signal by blanking samples of the CDMA signal, when the samples of the CDMA signal exceed an upper or lower blanking threshold, wherein the upper and lower blanking thresholds are offset by a square root of an estimated power, $P_{est}$, of the CDMA signal multiplied by a chip value polarity of the generated test signal and a predefined scaling factor, $\alpha$

S104 | acquiring the CDMA signal, when a correlation between the modified CDMA signal and the generated test signal is above a predefined detection threshold

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3454090 A1
- EP 3182164 A1
- EP 3182606 A1
- EP 3118653 A1